# EUROPEAN PATENT APPLICATION

(11) **EP 4 782 340 A1**
(43) Date of publication of application: **29.07.2026**
(21) Application number: 26151830.2
(22) Date of filing: 14.01.2026
(51) Int. Cl.: B64D 37/04, B64D 37/06, B64D 37/30

(54) **FUEL TANK SUPPORTING ARRANGEMENT, ASSOCIATED FUEL SUPPLY SYSTEM AND AIRCRAFT**

(30) Priority: 22.01.2025 DE 102025000242
(71) Applicant: Airbus Operations GmbH, 21129 Hamburg (DE)
(72) Inventor: Siemann, Martin, 21129 Hamburg (DE)
(74) Representative: Airbus Germany

(57) **Abstract**

This fuel tank supporting arrangement (22) for an aircraft, comprises:
- an inner support (30), configured for being fastened to a fuel tank (20); and
- an outer support (32), configured for being fastened to a fuselage (12) of the aircraft (10);

the inner support (30) and the outer support (32) being connected to each other and configured for supporting the fuel tank (20) in the fuselage (12),
the inner support (30) and the outer support (32) being configured to be moveable one relative to another along a predetermined path (P) if an acceleration of the fuel tank (20) relative to the fuselage (12) reaches a predetermined excessive acceleration threshold (Ta).

## Description

The present disclosure relates to a fuel tank supporting arrangement. This disclosure also relates to a fuel supply system. The present disclosure further relates to an aircraft.

Aircrafts typically comprise one or more fuel tanks containing a fuel to be supplied to the aircraft's one or several propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed and improved as aircraft engines.

The hydrogen employed in such aircraft can be stored and transported in its liquid state in hydrogen tanks (being pressurised vessels configured to contain liquid hydrogen) carried by the respective aircraft.

In the domain of fuel tank supporting arrangements, one has only limited experience. In particular, it is uncommon to use supporting arrangements for fuel tanks installed in aircrafts relying on gasoline or jet fuel as above mentioned. **In** particular, in such aircrafts, fuel is mostly stored in the wings of aircrafts. One knows storing fuel in the rear section of the fuselage, but these tanks are generally defined by a portion of the fuselage, for example a lower portion of the fuselage, such that fuel tank supporting arrangements are not required. Such a tank setup is usually referred to as "integral tank".

For next generation aircraft, and as above mentioned, it is considered to use hydrogen, preferably in its liquid form, to supply energy to engines of the aircraft. Storing hydrogen is complex and current tank designs for example rely on spherical and/or cylindrical tanks, for example with hemispherical and/or torispherical dome caps. Such fuel tanks generally have to be supported in the fuselage. Such a tank setup is generally referred to as "non-integral tank".

It has then been proposed to use fuel tank supporting arrangements that are configured for supporting fuel tanks in the fuselage of aircrafts. Known proposals rely for example on supports arranged between a lower lobe of the fuselage and a lower section of the fuel tank such that the fuel tank rests on the supports.

Such a proposal is however not entirely satisfying. In particular, the supports are additional elements that have to be placed between the fuel tank and the fuselage. Such elements can add weight and complexity to the aircraft. Furthermore, since such elements are arranged at the lower lobe of the fuselage, these elements impact the deformation of the fuselage in potential crash scenarios. In particular, such elements can lead to an "unrolling kinematics" of the fuselage, which means that sections of the fuselage protrude inside the volume initially defined by the fuselage in a potential crash scenario. This can impact safety, in particular when such unrolling leads to interferences between the fuselage and the tank. Finally, the behavior of such supports does not allow for an entirely controlled displacement/acceleration of the fuel tank during impact in a potential crash scenario, which can further impact safety of operation.

An object of the present invention is therefore to provide a fuel tank supporting arrangement for an aircraft which is light and simple and which improves the safety of operation of the aircraft and thus, of its passengers.

To this end, the invention relates to a fuel tank supporting arrangement for an aircraft, comprising:
- an inner support, configured for being fastened to a fuel tank; and
- an outer support, configured for being fastened to a fuselage of the aircraft;

the inner support and the outer support being connected to each other and configured for supporting the fuel tank in the fuselage,
the inner support and the outer support being configured to be moveable one relative to another along a predetermined path if an acceleration of the fuel tank relative to the fuselage reaches a predetermined excessive acceleration threshold.

The use of an inner support and an outer support configured to be moveable one relative to another along a predetermined path if an acceleration of the fuel tank relative to the fuselage reaches a predetermined excessive acceleration threshold is especially advantageous since this allows the arrangement to both maintain the fuel tank in the fuselage for normal operations but also to allow a controlled displacement that limits loads when the acceleration of the fuel tank relative to the fuselage reaches a predetermined excessive acceleration. This, in turns, allows obtaining a light and simple fuel tank supporting arrangement which improves the safety of operation of the aircraft and thus, of its passengers.

According to other advantageous aspects of the invention, the fuel tank supporting arrangement comprises one or more of the following features taken alone or according to all technically possible combinations:
- the predetermined path is a straight path;
- the predetermined excessive acceleration threshold is comprised between 15 m/s² and 500 m/s²;
- the outer support comprises two lateral peripheral frame portions protruding towards each other and configured for being arranged laterally relative to the fuel tank;
- the inner support comprises a beam element comprising a central portion and two opposite arms,
the central portion being configured to be connected to the fuel tank and each opposed arms of the beam element being connected to the outer support;
- the beam element extends substantially along a curved beam direction such that the two opposite arms are offset relative to the central portion along the predetermined path;
- the fuel tank supporting arrangement further comprises a connection element, the inner support, the outer support and the connection element being configured to form a bearing mode absorber between the fuel tank and the fuselage;
- one of the inner support and outer support comprises a hole and a slot, the hole and the slot receiving the connection element,

the connection element being configured to tear the one of the inner support and outer support radially to the hole if an acceleration of the fuel tank relative to the fuselage reaches the predetermined excessive acceleration threshold,
the slot being configured for guiding the connection element such that the inner support and the outer support are moved one relative to another along the predetermined path if the acceleration of the fuel tank relative to the fuselage reaches the predetermined excessive acceleration threshold;
   - the fuel tank supporting arrangement comprises a plurality of connection elements, the one of the inner support and outer support comprising a plurality of holes and slots, each hole receiving one of the connection elements and each slot being configured for guiding said one of the connection elements; and
   - each of the lateral peripheral frame portions of the outer support comprises between 2 and 64 holes, respectively slots.

The invention further relates to a fuel supply system for an aircraft, comprising a fuel tank and at least one fuel tank supporting arrangement as presented above, the inner support of the at least one fuel tank supporting arrangement being fastened to the fuel tank.

According to other advantageous aspects of the invention, the fuel supply system comprises one or more of the following features taken alone or according to all technically possible combinations:
- the predetermined path along which the inner support and the outer support of the fuel tank supporting arrangement are configured to be moveable extends substantially tangentially to the fuel tank; and
- the fuel tank comprises a body and two caps, the body being longitudinally arranged between the two caps, a transverse section of the fuel tank being smaller at each of the caps than at the body, the fuel supply system comprising a plurality of fuel tank supporting arrangements, the inner support of each fuel tank supporting arrangement being fastened to one of the two caps.

The invention further relates to an aircraft comprising a fuselage and a fuel supply system as presented above, the outer support of the fuel tank supporting arrangement of the fuel supply system being fastened to the fuselage of the aircraft.

According to an advantageous embodiment of the aircraft, a distance between an upper lobe of the fuselage and the fuel tank is inferior to a distance between a lower lobe of the fuselage and the fuel tank as long as the acceleration of the fuel tank relative to the fuselage remains below the predetermined excessive acceleration threshold.

The invention will be better understood when reading the following description, which is given solely by way of example and with reference to the appended drawings, in which:
- Figure 1 is a schematic view of an aircraft comprising a fuel supply system with a fuel tank supporting arrangement according to the invention;
- Figure 2A and 2B are schematic view of a section of the fuselage of the aircraft of figure 1, in which the fuel tank supporting arrangement is presented in a pre-crash configuration in figure 2A and in a post-crash configuration in figure 2B;
- Figure 3 is a schematic view of a detail of the fuel tank supporting arrangement presented in figure 2A;
- Figure 4 is a schematic cut view, taken from cut plane C-C', of a detail of the fuel tank supporting arrangement presented in figure 3; and
- Figure 5 is a schematic view similar to the view of figure 2A, in which another example fuel tank supporting arrangement according to the invention is presented.

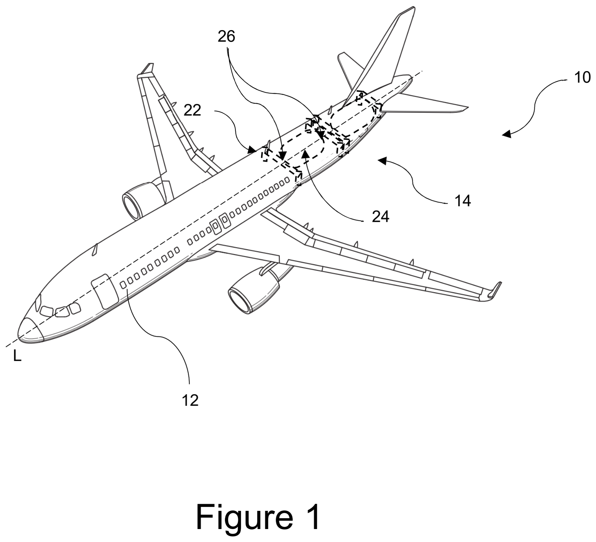

With reference to figure 1, an aircraft 10 comprises a fuselage 12 and a fuel supply system 14.

The aircraft 10 is for example an airplane, for example an airliner.

As presented in figure 1, the fuselage 12 is elongated along a longitudinal direction L. In the example of figure 1, the fuselage 12 has a substantially tubular shape. In other non-illustrated example, the fuselage 12 forms part of a blended wing body structure for the aircraft 10.

The fuselage 12 comprises for example a skin 16 and at least one frame 18. The fuselage 12 further preferably comprises at least one stringer (non-referenced).

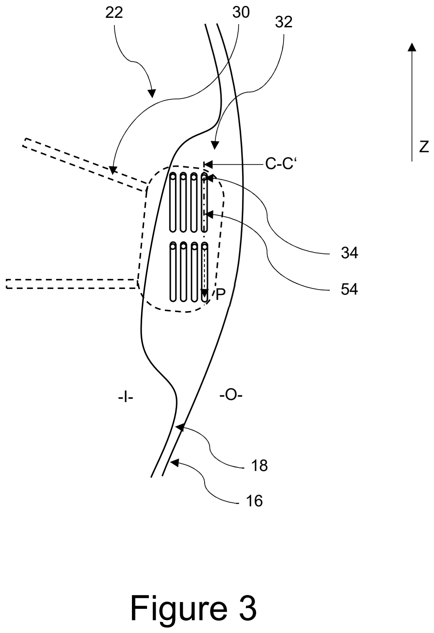

As illustrated in figure 3, the skin 16 comprises is for example exposed to an outside O of the aircraft 10, and for example separates the outside O from an inside I of the aircraft 10.

The skin 16 is for example made of an aluminum alloy or of a composite material, for example composed of a resin and of fibers. It is understood that the skin 16 may be formed of a plurality of skin panels (non-referenced).

The at least one frame 18 is for example arrange in the inside I defined by the skin 16. The at least one frame 18 is for example supporting the skin 16. To that end, the skin 16 is for example fastened to the at least one frame 18.

The fuselage 12 comprises in particular a plurality of frames 18, arranged such that the plurality of frames 18 support the skin 16 to define the fuselage 16.

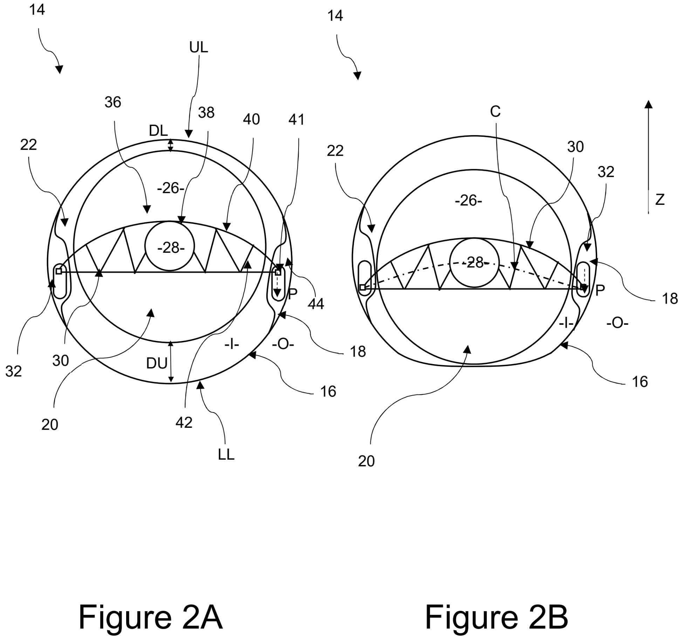

As understood from figures 2A, 2B and 3, each frame 18 is for example extending in a plane substantially perpendicular to the longitudinal direction.

In particular, each frame 18 is for example extending along an ovaloid contour (non-referenced) extending around the longitudinal direction L.

As above mentioned, the fuselage 12 preferably comprises at least one stringer (non-referenced) and for example comprises a plurality of stringers.

Each stringer extends substantially along the longitudinal direction L. Each stringer for example supports the skin 16 and connects for example the plurality of frames 18 to define the fuselage 16.

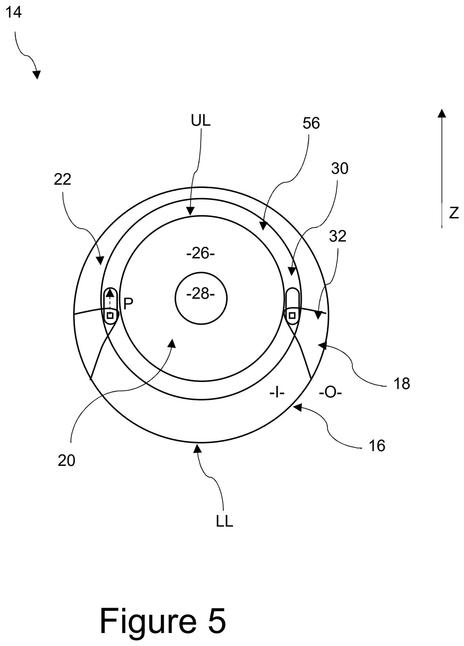

As visible from figures 2A, 2B and 5, the fuselage 12 comprises for example an upper lobe UL and a lower lobe LL. It is understood that the term "upper" and "lower" are here defined with reference to a position in which the aircraft 10 is on the ground or under nominal/cruise flying conditions. It is then understood that the lower lobe LL is facing the ground (non-referenced) and that the upper lobe UL is facing away from the ground under such conditions.

As visible from figures 1 to 5, the fuel supply system 14 comprises a fuel tank 20 and at least one fuel tank supporting arrangement 22. The fuel supply system 14 further comprises for example fuel lines (non-referenced) configured for supplying a fuel stored in the fuel tank 20 to engines (non-referenced) and/or fuel cells (non-referenced) of the aircraft 10.

For example, as visible form figure 1, the fuel supply system 14 comprises a plurality of fuel tanks 20.

The fuel tank 20 is for example a hydrogen tank. For example, the fuel tank 20 is configured to store hydrogen in its liquid form.

The fuel tank 20 is for example a double walled tank, also known under the denomination "dewar" tank.

The fuel tank 20 for example comprises a body 24 and two caps 26.

The body 24 is for example longitudinally arranged between the two caps 26. The body may preferably be formed by a tubelike tank wall whose opposite open ends are closed by the caps 26.

The caps 26 may respectively be shaped as a spherical dome, or have an ellipsoidal or a torispherical shape.

Each cap 26 for example further comprises poles 28, protruding from the rest of the caps 26 away from the body 24.

The fuel tank 20 is for example arranged with its longitudinal axis (non-referenced), for example defined by an elongation direction of the body 24, running in the longitudinal direction defined by the fuselage 12. In such case, (and with respect to direction of flight of the aircraft 10), said caps 26 may thus form a front and a rear of the fuel tank 20.

The tubelike tank wall forming the body 24 may have a (straight or bulged) cylindrical shape or a (straight or bulged) conical shape, or it may comprise at least a portion having a (straight or bulged) cylindrical shape and/or at least a portion having a (straight or bulged) conical shape.

As visible from figure 1, a transverse section of the fuel tank 20 at the or each caps 26, or in other words, a transverse section of the or each cap (non-referenced), is smaller than a transverse section of the fuel tank 20 at the body 24, or in other words, a transverse section of the body (non-referenced).

As presented in figure 1, the fuel supply system 14 comprises for example a plurality of fuel tank supporting arrangements 22. As this will be presented in more details later, the fuel supply system 14 comprises for example at least two fuel tank supporting arrangements for each fuel tank 20.

The fuel tank supporting arrangement 22 is configured for supporting the fuel tank 20. In particular, each fuel tank supporting arrangement 22 is for example configured for supporting at least one of the fuel tanks 20. In a non-illustrated example, a fuel tank supporting arrangement 22 is for example configured for support two adjacent fuel tanks 20.

The fuel tank supporting arrangement 22 comprises an inner support 30 and an outer support 32. The fuel tank supporting arrangement 22 further comprises for example at least one connection element 34.

The inner support 30 is fastened to the fuel tank 20.

In particular, as understood from figures 2A, 2B and 5, the inner support 30 of each fuel tank supporting arrangement 22 is fastened to one of the two caps 26. For example, when the fuel supply system 14 comprises two fuel tank supporting arrangements 22 for each fuel tank 20, each fuel tank supporting arrangement 22 is fastened to a respective fuel cap 26.

As this will be presented in more details later, the inner support 30 is for example connected to the outer support 32.

In the example of figures 2A, 2B and 3, the inner support 30 comprises a beam element 36.

The beam element 36 comprises for example a central portion 38 and at least two opposite arms 40.

The central portion 38 is connected to the fuel tank 20. As understood from the above, the central portion 38 is for example connected to one of the caps 26. For example, the central portion 38 is connected to one of the poles 28. As illustrated in figures 2A, 2B, the central portion 38 surrounds for example one of the poles 28.

The opposite arms 40 are connected to the outer support 32. For example, each arm comprises an end 41, opposite to the central portion 38. The end 41 connects for example the opposite arms 40 to the outer support 32.

As presented in figures 2A and 2B, the opposite arms 40 for example each comprise a plurality of structural elements 42, such as tube, which are cooperating to form the opposite arms 40. In another non illustrated example, the opposite arms are for example formed by a single and/or monolithic profile.

As presented in figures 2A and 2B, the beam element 36 extends for example substantially along a curved beam direction C. In particular, the two opposite arms 40 are for example shifted and/or curved relative to the central portion 38, for example towards the lower lobe LL.

The two opposite arms 40 are for example shifted relative to the central portion 38 along the predetermined path P that will be presented in more details later.

As visible from figures 2A and 2B, the ends 41 of the arms 40 are for example offset relative to the central portion 38 in direction of the lower lobe LL.

The outer support 32 is fastened to the fuselage 12. In an example, the outer support 32 is not only fastened to the fuselage 12 but is also integral with the fuselage 12.

As presented in the example of figures 2A and 2B, the outer support 32 comprises two lateral peripheral frame portions 44.

For example each of the lateral peripheral frame portion 44 is connected to the frame 18. As presented in the example of figures 2A and 2B, each of the lateral peripheral frame portion 44 is for example integral with the frame 18 and/or formed by a portion of the frame 18. In other non-illustrated examples, the each of the lateral peripheral frame portion 44 is fastened to the frame 18.

The two lateral peripheral frame portions 44 are for example protruding towards each other and are arranged laterally relative to the fuel tank 20. One understands for example that when the outer support comprises more than two lateral peripheral frame portions 44, lateral peripheral frame portions 44 are forming couples, the two lateral peripheral frame portions 44 of a couple being for example protruding towards each other and being arranged laterally relative to the fuel tank 20.

As understood from figures 2A and 2B, each lateral frame portion is for example arranged laterally relative to the fuel tank 20 at an intermediate region of the fuselage (non-referenced), vertically arranged between the upper lobe UL and the lower lobe LL.

As understood from figures 1 to 5, the inner support 30 and the outer support 32 are connected to each other and configured for supporting the fuel tank 20 in the fuselage 12.

Furthermore, and as this will be presented in more details later, the inner support 30 and the outer support 32 are configured to be moveable one relative to another along a predetermined path P if an acceleration of the fuel tank 20 relative to the fuselage 12 reaches a predetermined excessive acceleration threshold Tₐ.

On understands the inner support 30 and the outer support 32 are for example configured to be moveable one relative to another along the predetermined path P if a load applied between the inner support 30 and the outer support 32 reaches a predetermined excessive load threshold T_{L}.

For example, and as this will be presented in more details later, one of the inner 30 and outer 32 supports is deformed if the load applied between the inner support 30 and the outer support 32, resulting from the acceleration of the fuel tank 20 relative to the fuselage 12, reaches the predetermined excessive load threshold T_{L}, such that the inner 30 and outer 32 supports are moveable one relative to another along the predetermined path P.

The predetermined excessive acceleration threshold Tₐ is for example representative of a crash of the aircraft 10.
The predetermined excessive acceleration threshold Tₐ is for example comprised between 15 m/s² and 500 m/s², for example between 20 m/s² and 300 m/s², for example between 30 m/s² and 150 m/s².

The inner support 30 and the outer support 32 are for example configured to be static one relative to another as long as the acceleration of the fuel tank 20 relative to the fuselage 12 remains inferior or equal to the predetermined excessive acceleration threshold Tₐ and/or as long as the load applied between the inner support 30 and the outer support 32 remains inferior or equal to the predetermined excessive load threshold T_{L}.

As illustrated on figure C, the predetermined path P is for example a straight path. In other non-illustrated example the predetermined path P is a curved path.

As illustrated from figure 3, the predetermined path P is for example extending substantially tangentially to the fuel tank 20. One understands by the term "substantially tangentially" that the predetermined path P is then not directed towards the fuel tank 20 but instead is extending on the side of the fuel tank 20.

One further understands that the predetermined path P is for example substantially parallel to a tangent of the fuel tank at a region of the fuel tank 20 being for example adjacent to the end 41 of the beam element 36. One understands here for example that an angle between the predetermined path P and the tangent of the fuel tank 20 at a region of the fuel tank 20 being adjacent to the end 41 of the beam element 36 is for example inferior to 20°.

As visible from figure 2A, 2B, 3 and 5, the predetermined path P is for example oriented along a vertical direction Z, for example along a vertical direction Z defined between the upper lobe UL and the lower lobe LL.

In the example of figure 2A, 2B and 3, the predetermined path P is for example oriented towards the lower lobe LL, for example such that inner support 30 is moved towards the lower lobe LL if the acceleration of the fuel tank 20 relative to the fuselage 12 reaches a predetermined excessive acceleration threshold Tₐ.

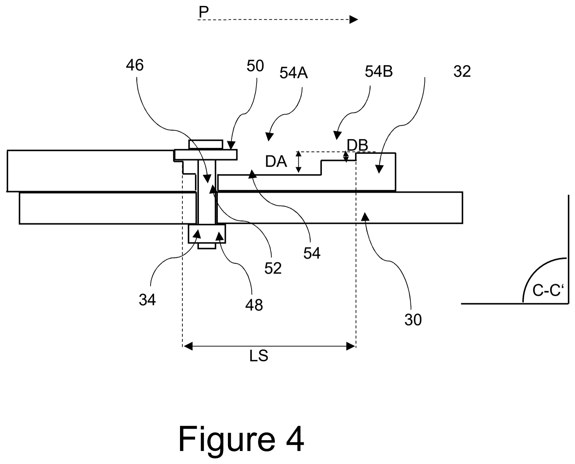

As visible from figure 4, the connection element 34 connects the inner support 30 and the outer support 32.

In the example presented in figure 4, the connection element 34 is distinct from the inner support 30 and from the outer support 32. In particular, in such an embodiment, the connection element 34 comprises a bolt 46, a nut 48 and a washer 50. In other non-illustrated embodiments, one of the inner support 30 and outer support 32 comprises a protrusion forming at least part of the connection element 34.

As visible from figure 4, the inner support 30, the outer support 32 and the connection element 34 are configured to form a bearing mode absorber between the fuel tank 20 and the fuselage 12.

For example, and as illustrated in figure 4, one of the inner support 30 and outer support 32 comprises a hole 52 and slot 54, the hole 52 and the slot 54 receiving the connection element 34. As understood from figure 4, the connection element 34 is then for example fastened to the other of the inner support 30 and outer support 32.

As visible for figure 4, the hole 52 for example opens in the slot 54, for example at a bottom (non-referenced) of the slot 54.

In the example of figures 2 to 4, the outer support 32 comprises the hole 52 and the slot 54 receiving the connection element 34.

The connection element 34 is for example configured to tear the one of the inner support 30 and outer support 32 radially to the hole 52, for example along the slot 54, if an acceleration of the fuel tank 20 relative to the fuselage 12 reaches the predetermined excessive acceleration threshold Tₐ and/or if a load applied between the inner support 30 and the outer support 32 reaches a predetermined excessive load threshold T_{L}

The slot 54 is for example configured for guiding the connection element 34 such that the inner support 30 and the outer support 32 are moved one relative to another along the predetermined path P if the acceleration of the fuel tank 20 relative to the fuselage 12 reaches the predetermined excessive acceleration threshold Tₐ and/or if a load applied between the inner support 30 and the outer support 32 reaches the predetermined excessive load threshold T_{L}.

As visible from figure 4, a depth of the slot is for example variable along the predetermined path. For example, in the example presented in figure 4, a depth DA of the slot 54 on a first portion 54A of the slot is deeper than a depth DB on a second portion 54B of the slot. It is understood that depth of the slot 54 is chosen to modulate the bearing force of the supporting arrangement 22 and that more than two different portions of the slot 54 can exhibit different depth. In an example, the depth of the slot 54 evolves continuously along the slot 54.

As understood from figure 4, the first portion 54A of the slot is for example arranged upstream the second portion 54B of the slot along the predetermined path. The deeper depth of the slot 54 on the first portion 54A of the slot ensures for example receiving material teared by the connection element 34 and allows this teared material to be expulsed from the bearing zone. This ensures a possible displacement along the predetermined path P.

A total length LS of the slot 54 is for example comprised between 100mm and 1000mm.

The fuel tank supporting arrangement 22 comprises for example a plurality of connection elements 34. In such an example, one of the inner support 30 and outer support 32 then comprises for example a plurality of holes 52 and slots 54.

In such an example, each hole 52 receives one of the connection elements 34 and each slots 54 is configured for guiding said one of the connection elements 34. The inner support 30 and the outer support 32 are then for example moveable one relative to another along a plurality of predetermined paths P, each defined by a respective slot 54.

In the example of figure 2A, 2B and 3, the outer support 32 comprises a plurality of holes 52 and slots 54.

Each of the lateral peripheral frame portions 44 of the outer support 32 comprises for example between two and sixty four holes 52, respectively slots 54, for example between four and thirty two holes 52, respectively slots 54. In the example presented in figure 3, each of the lateral peripheral frame portions 44 of the outer support 30 comprises eight holes and eight slots. For example, for each of the lateral peripheral frame portions 44, the slots 54 and the associated predetermined paths P are parallel one relative to another.

As understood from the above, the inner support 30 and the outer support 32 are configured to be moveable one relative to another along the predetermined path P if an acceleration of the fuel tank 20 relative to the fuselage 12 reaches a predetermined excessive acceleration threshold Tₐ, such that the fuel tank 20 is moveable within the fuselage 12 under such conditions.

As visible from figure 2A, a distance DU between an upper lobe UL of the fuselage 12 and the fuel tank 20 is for example inferior to a distance DL between a lower lobe LL of the fuselage 12 and the fuel tank 20 as long as the acceleration of the fuel tank 20 relative to the fuselage 12 remains below the predetermined excessive acceleration threshold Tₐ.

As illustrated in figure 2B, the distance DU between the upper lobe UL of the fuselage 12 and the fuel tank 20 is for example superior to the distance DL between the lower lobe LL of the fuselage 12 and the fuel tank 20 after the acceleration of the fuel tank 20 relative to the fuselage 12 has reached the predetermined excessive acceleration threshold Tₐ. As understood from figure 2B, this results from the displacement of the inner support 30 relatively to the outer support 32. Furthermore, and for example, this may result from a deformation of the lower lobe LL that results for example from a crash that caused the acceleration of the fuel tank 20 relative to the fuselage 12 to reach the predetermined excessive acceleration threshold Tₐ.

In a non-illustrated example, the fuel tank supporting arrangement comprises at least one energy absorption element, arranged between the lower lobe LL and the fuel tank 20. The energy absorption element comprises for example a foam, a lattice structure or an auxetic structure, for example to absorb energy, mostly kinetic energy, between the fuselage 12 and the fuel tank 20 if the acceleration of the fuel tank 20 relative to the fuselage 12 reaches the predetermined excessive acceleration threshold Tₐ.

The energy absorption element might for example be configured to ensure a controlled deformation of the lower lobe LL, for example for the lobe to flatten and to prevent the lobe from unrolling, for example if the lower lobe LL impacts the ground (non-represented).

The example presented in figure 5 will now be presented in more details. The fuel supply system 14 presented in figure 5 differs from the above presented fuel supply system 14 only through the elements presented below. Analogous elements bear the same reference signs.

In the example of figure 5, and contrary to the above presented example, the inner support 30 comprises an inner frame 56 fastened to the fuel tank 20. In an example, the inner support 30 is not only fastened to the fuel tank 20 but is also integral with the fuel tank 20.

As for the above presented example, the outer support 32 of the example of figure 5 comprises two lateral peripheral frame portions 44 protruding towards each other. It is understood that the frame portions 44 can form arms fastened to the fuselage 12.

In the example of figure 5, the at least one hole 52 and the at least one slot 54 are arranged on the inner support 30 instead of being arranged on the outer support 32.

As a result, and as visible from figure 5, the predetermine path is oriented towards the upper lobe UL instead of being oriented towards the lower lobe LL, for example such that outer support 32 is moved towards the upper lobe UL if the acceleration of the fuel tank 20 relative to the fuselage 12 reaches a predetermined excessive acceleration threshold Tₐ.

In a non-illustrated example, the fuel tank supporting arrangement comprises an intermediate support. The intermediate support is connected to the inner support 30 and to the outer support 32 and connects the inner support 30 and the outer support 32.

The inner support 30 and the intermediate support are for example configured to be moveable one relative to another along a first intermediate predetermined path if an acceleration of the fuel tank 20 relative to the fuselage 12 reaches a predetermined first intermediate excessive acceleration threshold and/or load threshold

The outer support 32 and the intermediate support are for example configured to be moveable one relative to another along a second intermediate predetermined path if an acceleration of the fuel tank 20 relative to the fuselage 12 reaches a predetermined second intermediate excessive acceleration threshold and/or load threshold.

For example, the predetermined first intermediate excessive acceleration threshold is different to the predetermined second intermediate excessive acceleration threshold. For example the predetermined first intermediate excessive load threshold is different to the predetermined second intermediate excessive load threshold.

A method of absorbing energy using a fuel tank supporting arrangement as presented above will now be described.

In a supporting step, the fuel tank supporting arrangement 22 supports the fuel tank 20 in the fuselage 12.

In an acceleration step, the fuel tank 20 is accelerated relatively to the fuselage 12. In the acceleration step, the acceleration of the fuel tank 20 relative to the fuselage 12 reaches in particular a predetermined excessive acceleration threshold Tₐ.

In an absorption step, subsequent to the acceleration step, the inner support 30 and the outer support 32 are moved one relative to the other. In particular, this results for example in the fuel tank 20 moving relative to the fuselage 12.

As seen above, an inner support and an outer support configured to be moveable one relative to another along a predetermined path if an acceleration of the fuel tank relative to the fuselage reaches a predetermined excessive acceleration threshold ensures having proper control of the acceleration of the fuel tank 20 in the fuselage 12 with a simple arrangement, which thus ensures a lightweight and safe support of the fuel tank 20 for the aircraft 10.

Having a predetermined path P along which the inner support 30 and the outer support 32 are configured to be moveable one relative to another which is a straight path further improves the control of the dynamic response of the fuel tank in case of excessive accelerations.

Having a predetermined excessive acceleration threshold comprised between 15 m/s² and 100 m/s² is especially relevant since this ensures that the inner support 30 and the outer support 32 support the fuel tank 20 in the fuselage 12 under nominal/cruise conditions for the aircraft but also allows a displacement of the fuel tank 20 relative to the fuselage 12 for excessive acceleration/loads between the fuselage 12 and the fuel tank 20, which in turns helps in limiting the acceleration/loads between the fuselage 12 and the fuel tank 20.

The geometry of the outer support 32 comprising frames and/or of the inner support comprising a beam element 36 as presented above is particularly advantageous to improve integration of the fuel tank supporting arrangement 22 in the fuselage 12.

Having a beam substantially curved along a curved beam direction C as presented above is especially advantageous to provide a more direct and appropriate load path between the fuselage 12 and the fuel tank 20 thus leading to a more efficient acceleration/load absorption for the fuel tank supporting arrangement 22.

Having the inner support 30, the outer support 32 and the connection element 34 forming a bearing mode absorber between the fuel tank 20 and the fuselage 12, for example in having one of the inner 30 and outer 32 support comprising a hole 52 and a slot 54, is especially advantageous, in particular for the simplicity and the reliability of such a solution.

The use of a plurality of connection elements 34, each received in holes 52 and slots 54 as above mentioned is particularly relevant to distribute the loads across several arrangements forming a bearing mode absorber. In particular, the use of between 2 and 64 holes, respectively slots is a particularly good compromise to form such bearing mode absorbers.

Having a predetermined path P along which the inner support 30 and the outer support 32 of the fuel tank supporting arrangement are configured to be moveable extending substantially tangentially to the fuel tank 20 is especially relevant to have a stable supporting of the fuel tank 20 but also allows more flexibility on the choice of predetermined path P.

Having the inner support 30 of each fuel tank supporting arrangement 22 being fastened to one of the two caps 26 is especially relevant to limit the radial footprint of the fuel tank supporting arrangement 22, allowing easier integration in the fuselage 12.

### REFERENCE SIGNS:

- 10: aircraft
- 12: fuselage
- 14: fuel supply system
- 16: skin
- 18: frame
- 20: fuel tank
- 22: fuel tank supporting arrangement
- 24: body of the fuel tank
- 26: cap of the fuel tank
- 28: pole of the cap
- 30: inner support
- 32: outer support
- 34: connection element
- 36: beam element
- 38: central portion of the beam element
- 40: arm of the beam element
- 41: end of the beam element
- 42: structural elements of the arm
- 44: lateral peripheral frame portions
- 46: bolt
- 48: nut
- 50: washer
- 52: hole
- 54: slot
- 54A: first portion of the slot
- 54B: second portion of the slot
- 56: inner frame
- C-C': cut plane
- DU: distance between the fuel tank and the upper lobe
- DL: distance between the fuel tank and the lower lobe
- LS: length of the slot
- DA: depth of the first portion of the slot
- DB: depth of the second portion of the slot
- T_{L}: excessive load threshold
- Tₐ: excessive acceleration threshold
- Z: vertical direction
- P: predetermined path
- O: outside
- I: inside
- L: longitudinal direction
- UL: upper lobe
- LL: lower lobe
- C: curved beam direction

## Claims

1. Fuel tank supporting arrangement (22) for an aircraft (10), comprising:
- an inner support (30), configured for being fastened to a fuel tank (20); and
- an outer support (32), configured for being fastened to a fuselage (12) of the aircraft (10);
the inner support (30) and the outer support (32) being connected to each other and configured for supporting the fuel tank (20) in the fuselage (12),
the inner support (30) and the outer support (32) being configured to be moveable one relative to another along a predetermined path (P) if an acceleration of the fuel tank (20) relative to the fuselage (12) reaches a predetermined excessive acceleration threshold (Tₐ).

2. Fuel tank supporting arrangement (22) according to claim 1, wherein the predetermined path (P) is a straight path.

3. Fuel tank supporting arrangement (22) according to any of the claims 1 or 2, wherein the predetermined excessive acceleration threshold (Tₐ) is comprised between 15 m/s² and 500 m/s².

4. Fuel tank supporting arrangement (22) according to any of the preceding claims, wherein the outer support (30) comprises two lateral peripheral frame portions (44) protruding towards each other and configured for being arranged laterally relative to the fuel tank (20).

5. Fuel tank supporting arrangement (22) according to any of the preceding claims, wherein the inner support (30) comprises a beam element (36) comprising a central portion (38) and two opposite arms (40),
the central portion (38) being configured to be connected to the fuel tank (20) and each opposed arms (40) of the beam element (36) being connected to the outer support (32).

6. Fuel tank supporting arrangement (22) according to claim 5, wherein the beam element (36) extends substantially along a curved beam direction (C) such that the two opposite arms (40) are offset relative to the central portion (38) along the predetermined path (P).

7. Fuel tank supporting arrangement (22) according to any of the preceding claims, wherein the fuel tank supporting arrangement (22) further comprises a connection element (34), the inner support (30), the outer support (32) and the connection element (34) being configured to form a bearing mode absorber between the fuel tank (20) and the fuselage (12).

8. Fuel tank supporting arrangement (22) according to claim 7, wherein one of the inner support (30) and outer support (32) comprises a hole (52) and a slot (54), the hole (52) and the slot (54) receiving the connection element (34),
the connection element (34) being configured to tear the one of the inner support (30) and outer support (32) radially to the hole (52) if an acceleration of the fuel tank (20) relative to the fuselage (12) reaches the predetermined excessive acceleration threshold (Tₐ),
the slot (54) being configured for guiding the connection element (34) such that the inner support (Tₐ) and the outer support are moved one relative to another along the predetermined path if the acceleration of the fuel tank relative to the fuselage reaches the predetermined excessive acceleration threshold,

9. Fuel tank supporting arrangement (22) according to claim 8, wherein the fuel tank supporting arrangement (22) comprises a plurality of connection elements (34), the one of the inner support (30) and outer support (32) comprising a plurality of holes (52) and slots (54), each hole (52) receiving one of the connection elements (34) and each slot (54) being configured for guiding said one of the connection elements (34).

10. Fuel tank supporting arrangement (22) according to claim 9 in its dependency to claim 4, wherein each of the lateral peripheral frame portions (44) of the outer support (32) comprises between 2 and 64 holes (52), respectively slots (54).

11. Fuel supply system (14) for an aircraft (10), comprising a fuel tank (20) and at least one fuel tank supporting arrangement (22) according to any of the claims 1 to 10, the inner support (30) of the at least one fuel tank supporting arrangement (22) being fastened to the fuel tank (20).

12. Fuel supply system (14) according to claim 11, wherein the predetermined path (P) along which the inner support (30) and the outer support (32) of the fuel tank supporting arrangement (22) are configured to be moveable extends substantially tangentially to the fuel tank (20).

13. Fuel supply system (14) for an aircraft according to claim 11 or 12, wherein the fuel tank (20) comprises a body (24) and two caps (26), the body (24) being longitudinally arranged between the two caps (26), a transverse section of the fuel tank (20) being smaller at each of the caps (26) than at the body (24), the fuel supply system (14) comprising a plurality of fuel tank supporting arrangements (22), the inner support (30) of each fuel tank supporting arrangement (22) being fastened to one of the two caps (26).

14. Aircraft (10) comprising a fuselage (12) and a fuel supply system (14) according to any of the claims 11 to 13, the outer support (32) of the fuel tank supporting arrangement (22) of the fuel supply system (14) being fastened to the fuselage (12) of the aircraft (10).

15. Aircraft (10) according to claim 14, wherein a distance (DU) between an upper lobe (UL) of the fuselage (12) and the fuel tank (20) is inferior to a distance (DL) between a lower lobe (LL) of the fuselage (12) and the fuel tank (20) as long as the acceleration of the fuel tank (20) relative to the fuselage (12) remains below the predetermined excessive acceleration threshold (Tₐ).
